# DEMANDE DE BREVET EUROPEEN

(11) **EP 1 643 039 A2**
(43) Date de publication de la demande: **05.04.2006**
(21) Numéro de dépôt: 05291922.2
(22) Date de dépôt: 16.09.2005
(51) Int. Cl.: E02F 3/96, E02F 3/40

(54) **Godet de chargement et de déchargement**

(30) Priorité: 16.09.2004 FR 0409833
(71) Demandeur: Emily SA, 29800 Treflevenez (FR)
(72) Inventeur: Nedelec, Pierre, 29460 Hanvec (FR)
(74) Mandataire: Maillet, Alain

(57) **Abrégé**

La présente invention concerne un godet (100) de chargement et de déchargement destiné à être supporté par un bras articulé (B) d'un engin automoteur (M), le godet (100) comprenant une benne. Le godet (100) comporte un dispositif de fragmentation (150) destiné à permettre la fragmentation du contenu de la benne (110) lors de son vidage, le dispositif de fragmentation (150) comprenant au moins un hérisson (160a, 160b) monté à rotation entre deux joues (151, 152) fixées de manière articulée sur des flancs latéraux (114, 115) dont est pourvue la benne (110), le dispositif de fragmentation (150) étant mobile entre une position où ledit ou chaque hérisson (160a, 160b) dégage l'ouverture de la benne (110) et une position où il recouvre l'ouverture de la benne (110).

Ainsi, selon la nature du produit déversé susceptible d'être contenu dans la benne, le godet permet de le déstructurer, de l'aérer (compost), de le concasser (bouteilles, palettes) ou de mélanger ses constituants (boues urbaines avec de la paille).

## Description

La présente invention concerne un godet de chargement et de déchargement destiné à être supporté par un bras articulé d'un engin automoteur, le godet comprenant une benne.

Un dispositif de fragmentation destiné à être monté sur un godet de chargement et de déchargement est également proposé.

Pour charger et décharger des volumes importants de produits en vrac, on utilise souvent un engin automoteur pourvu d'un bras de levage sur lequel est monté un godet apte à être, d'une part, élevé et abaissé par le bras de levage et, d'autre part, basculé autour de l'extrémité du bras de levage pour charger le produit ou le déverser. Un tel godet comprend essentiellement une benne pourvue d'un dispositif d'attelage permettant sa fixation sur le bras de levage.

On peut ainsi, par exemple, transférer dans une remorque toute ou partie d'un tas. Pour cela on bascule vers l'avant la benne et on la déplace au niveau du sol en direction du tas pour la remplir, puis on la soulève en la basculant vers l'arrière afin de la déplacer au-dessus de la remorque où la benne est basculée vers l'avant afin que le produit qu'elle contient puisse être déversé dans ladite remorque.

S'agissant de produits fibreux ou agglomérés, il est apparu intéressant de chercher à les aérer. De tels produits fibreux ou agglomérés sont constitués, par exemple, de compost utilisé en agriculture et dont la maturité n'est pas encore atteinte. Il peut s'agir de compost provenant d'un traitement du fumier par centrifugation.

S'agissant de produits solides, comme par exemple des bouteilles de verre, il est également apparu intéressant de chercher à réduire leurs volumes.

Enfin, il est aussi apparu intéressant de chercher à mélanger plusieurs produits ensemble, par exemple des boues urbaines avec de la paille pour fabriquer du compost.

Aussi, le but de l'invention est de proposer notamment un godet de chargement et de déchargement apte à être manoeuvré par un engin automoteur qui puisse aérer, concasser ou mélanger le(s) produit(s) qu'il contient lors de l'opération de déversement de son contenu.

A cet effet, est proposé un godet de chargement et de déchargement destiné à être supporté par un bras articulé d'un engin automoteur, le godet comprenant une benne, ledit godet étant remarquable en ce qu'il comporte un dispositif de fragmentation destiné à permettre la fragmentation du contenu de la benne lors de son vidage, le dispositif de fragmentation comprenant moins un hérisson monté à rotation entre deux joues fixées de manière articulée sur des flancs latéraux dont est pourvue la benne, le dispositif de fragmentation étant mobile entre une position où ledit ou chaque hérisson dégage l'ouverture de la benne et une position où il recouvre l'ouverture de la benne.

Ainsi, selon la nature du produit déversé susceptible d'être contenu dans la benne, le godet permet de le déstructurer, de l'aérer (compost), de le concasser (bouteilles, palettes) ou de mélanger ses constituants (boues urbaines avec de la paille, par exemple).

Selon une caractéristique additionnelle de l'invention, il est pourvu d'un moyen de manoeuvre apte à déplacer le dispositif de fragmentation autour de la benne entre ses deux positions extrêmes.

Selon une caractéristique additionnelle de l'invention, ledit ou chaque hérisson comporte un moyeu autour duquel est montée une pluralité de moyens de fragmentation, un moyen d'entraînement étant fixé sur une joue en étant logé à l'intérieur du moyeu, pour entraîner à rotation ledit moyeu.

Le moyen d'entraînement est ainsi disposé dans un endroit protégé. Il est avantageusement constitué par un moteur hydraulique destiné à être alimenté par le circuit hydraulique de l'engin automoteur.

Selon une caractéristique additionnelle de l'invention, chaque moyen de fragmentation comprend une couronne sur laquelle sont montés des couteaux faisant saillie à sa périphérie.

Le travail des couteaux pendant la rotation dudit ou de chaque hérisson fragmente le produit pendant son déversement.

Avantageusement, les extrémités libres de certains couteaux débordent latéralement de la couronne, pour accroître leurs efficacité.

Avantageusement, des couteaux sont tournés alternativement d'un bord et de l'autre de la couronne, pour encore accroître l'efficacité du travail des couteaux.

Selon une caractéristique additionnelle de l'invention, les couronnes sont disposées à intervalles réguliers sur ledit ou chaque moyeu, les couronnes étant décalées angulairement les unes par rapport aux autres de manière à ce que les couteaux d'un même type puissent former deux hélicoïdes de sens opposés sur respectivement les deux demi-parties du moyeu.

Selon une caractéristique additionnelle de l'invention, les couteaux sont montés de manière amovible sur les couronnes. On peut ainsi les remplacer lorsqu'ils sont usés.

Selon une caractéristique additionnelle de l'invention, chaque joue comprend une première branche, une seconde branche disposée de manière oblique dans le prolongement de la première, la première branche étant articulée sur une platine fixée sur un flanc latéral, un vérin constitutif du moyen de manoeuvre étant monté entre la platine et la première branche, la seconde branche supportant une des extrémités des hérissons.

Avantageusement, les joues sont réunies par l'intermédiaire d'au moins une barre permettant la synchronisation du mouvement des deux joues.

Selon une caractéristique additionnelle de l'invention, une roue libre hydraulique est montée entre le moyen d'entraînement et un arbre supportant ledit ou chaque moyeu d'entraînement pour réduire les à-coups de fonctionnement.

Selon une caractéristique additionnelle de l'invention, le fonctionnement du moyen de manoeuvre est asservi à la pression de fonctionnement du moyen d'entraînement dudit ou de chaque hérisson pour éviter le calage de ce moyen d'entraînement lorsque le dispositif de fragmentation se déplace vers sa position de travail.

Selon une caractéristique additionnelle de l'invention, le dispositif de fragmentation comprend un premier hérisson, un second hérisson disposés parallèlement l'un par rapport à l'autre.

Selon une caractéristique additionnelle de l'invention, la vitesse de rotation de chaque hérisson est déterminée indépendamment de celle de l'autre hérisson pour modifier le travail des moyens de fragmentation afin de modifier la qualité de la fragmentation du contenu de la benne pendant son vidage.

Selon une caractéristique additionnelle de l'invention, le fonctionnement des moyens d'entraînement est tel qu'ils sont aptes à entraîner les hérissons dans le même sens de rotation.

Selon une caractéristique additionnelle de l'invention, les couronnes d'un des moyeux sont décalées latéralement par rapport à celles de l'autre moyeu.

Selon une caractéristique additionnelle de l'invention, la position d'un hérisson peut être modifiée, par l'intermédiaire d'un dispositif de réglage, de manière à corriger l'écartement entre le premier hérisson et le second hérisson pour l'adapter à la nature des produits à fragmenter.

Selon une caractéristique additionnelle de l'invention, deux barres réunissent les secondes branches des joues, les barres étant disposées respectivement en vis-à-vis des hérissons de manière à former une barrière de protection vis-à-vis des couteaux pendant le fonctionnement du dispositif de fragmentation.

Un dispositif de fragmentation prévu pour être monté sur un godet de chargement et de déchargement de type pourvu d'une benne, le godet étant destiné à être supporté par un bras articulé d'un engin automoteur est également couvert par l'invention. Le dispositif de fragmentation est prévu pour permettre la fragmentation du contenu d'une benne lors de son vidage.

Selon une caractéristique de ce dispositif, il comprend deux joues destinées à être montées de manière articulée respectivement sur les deux flancs latéraux du godet, au moins un hérisson, monté à rotation entre les deux joues, le dispositif de fragmentation pouvant être déplacé autour de la benne entre une position où ledit ou chaque hérisson dégage l'ouverture de la benne et une position où il recouvre l'ouverture de la benne.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue d'un engin automoteur pourvu d'un bras articulé sur lequel est monté un godet de chargement et de déchargement représenté en position de chargement selon l'invention,
la Fig. 2 représente une vue arrière en perspective d'un godet de chargement et de déchargement selon l'invention,
la Fig. 3 représente une vue avant en perspective d'un godet de chargement et de déchargement et dont le dispositif de fragmentation dont il est pourvu est représenté en position de dégagement selon l'invention,
la Fig. 4 représente une vue de face d'un godet de chargement et de déchargement selon l'invention,
la Fig. 5a représente une vue de face d'un moyen de fragmentation pour un dispositif de fragmentation d'un godet de chargement et de déchargement selon l'invention,
la Fig. 5b représente une vue de côté d'un moyen de fragmentation pour un dispositif de fragmentation d'un godet de chargement et de déchargement selon l'invention,
la Fig. 6 représente une vue avant en perspective d'un godet de chargement et de déchargement dont le dispositif de fragmentation est représenté en position de travail selon l'invention, et
la Fig. 7 représente une vue d'un engin automoteur pourvu d'un bras articulé sur lequel est monté un godet de chargement et de déchargement représenté en position de déchargement selon l'invention.

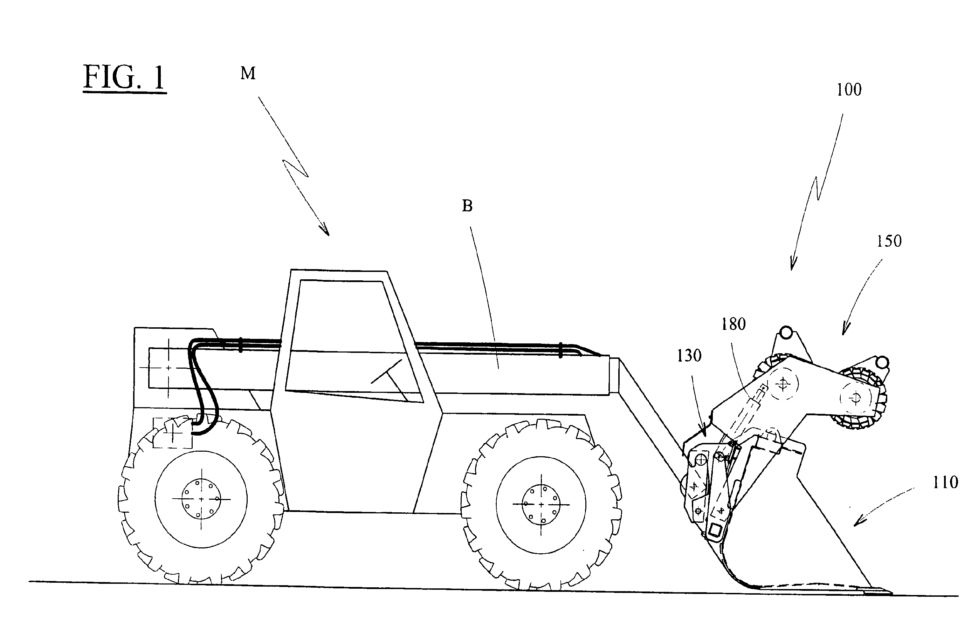

A la Fig. 1, le godet 100 de chargement et de déchargement qui est représenté est monté à l'extrémité libre hydraulique d'un bras articulé B d'un engin automoteur M. L'engin automoteur peut ainsi manoeuvrer le godet 100 pour charger des produits à l'intérieur de celui-ci, les déplacer et les décharger à un endroit prévu.

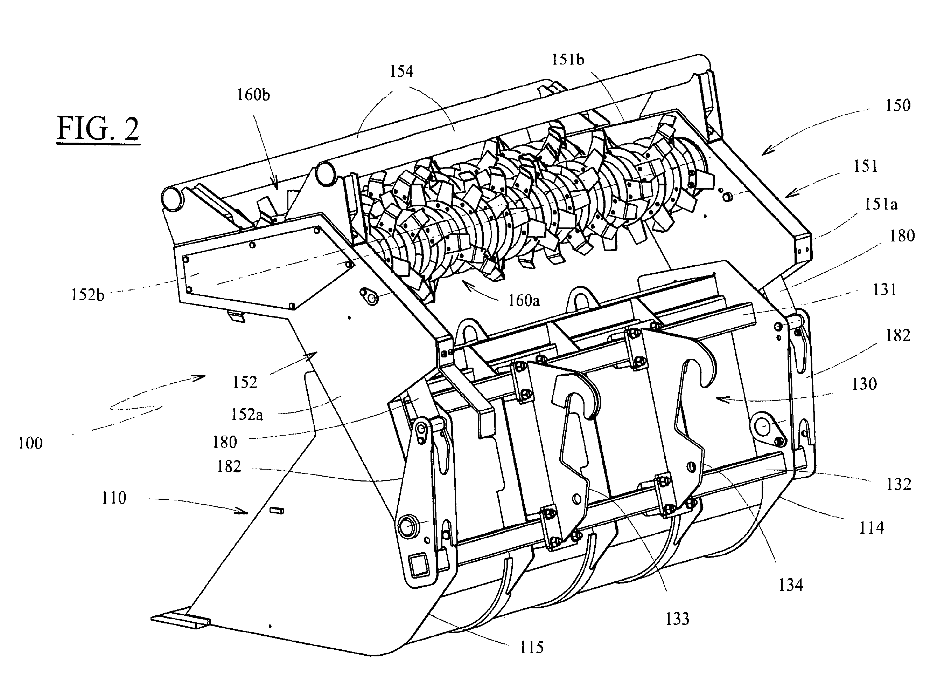

A la Fig. 2, le godet 100 de chargement et de déchargement comprend essentiellement une benne 110, un dispositif d'attelage 130 du godet 100 au bras articulé d'un engin automoteur ainsi qu'un dispositif de fragmentation 150 du contenu de la benne 110.

Le godet 100 de chargement et de déchargement convient pour déstructurer, aérer, concasser, fragmenter, mélanger un ou des produits susceptibles d'être contenus dans la benne 110 pendant son vidage. Citons parmi les applications envisagées, le concassage en fragments de bouteilles de verre ou de palettes réformées, le mélange de boues urbaines avec de la paille pour fabriquer du compost.

Une autre utilisation à laquelle il sera fait référence dans la description de cette invention consiste à aérer du compost pour favoriser sa maturation. Rappelons que pour fabriquer du compost, on peut traiter du lisier par centrifugation pour séparer les parties liquides et les parties solides qui le constituent. Les parties solides sont formées en tas qu'il convient de déplacer de temps à autre pour les aérer afin de favoriser la maturation du compost.

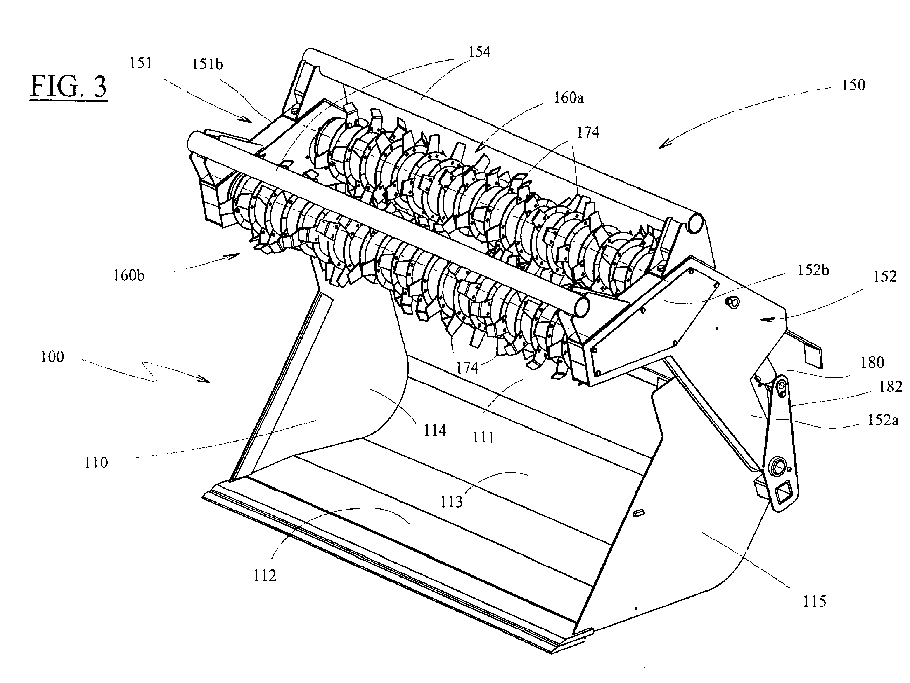

La benne 110 formant contenant pour les produits à transporter est constituée à la Fig. 3 d'une paroi dorsale 111 destinée à être tournée vers l'engin automoteur, d'une paroi frontale 112 reliées entre elles par un fond arrondi 113, et qui sont tous trois bordés latéralement par deux flancs latéraux 114, 115.

A la Fig. 1, le dispositif d'attelage 130 est destiné à permettre la fixation de la benne 110 sur le bras articulé B d'un engin automoteur M et par conséquent sa manoeuvre par ledit engin. Il est constitué à la Fig. 2 de deux traverses 131, 132 dont les extrémités sont fixées sur les deux flancs latéraux 114, 115 et sur lesquelles sont assemblées deux plaques ajourées 133, 134 formant crochet et qui sont destinées à recevoir l'organe d'accouplement mécanique et hydraulique du bras articulé de l'engin automoteur.

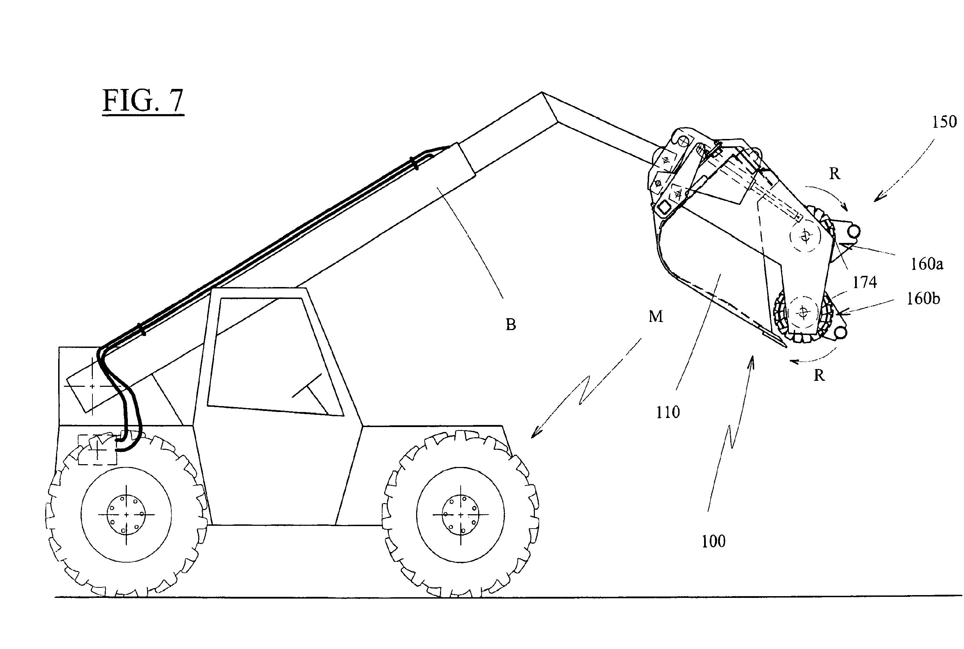

Le dispositif de fragmentation 150 dont est pourvu aux Figs. 1 et 7 le godet 100 est destiné à permettre la fragmentation du contenu de la benne 110 lors de l'opération de déversement de son contenu. Le godet 100 peut ainsi déstructurer, aérer, concasser ou mélanger le contenu de la benne 110 pendant son vidage.

Le dispositif de fragmentation 150 comprend aux Figs. 2, 3 et 6 deux joues 151, 152 de profil général en L pourvues respectivement de premières branches 151a, 152a montées à rotation sur les deux flancs latéraux 114, 115 et de secondes branches 151b, 152b entre lesquelles sont montés à rotation un premier hérisson 160a et un second hérisson 160b. Le premier hérisson 160a et le second hérisson 160b sont disposés parallèlement l'un par rapport à l'autre. La position d'un hérisson 160 peut être modifiée, par l'intermédiaire d'un dispositif de réglage non représenté, de manière à corriger l'écartement entre le premier hérisson 160a et le second hérisson 160b pour adapter le fonctionnement du godet 100 à la nature des produits à fragmenter. Seule la première branche 152a est visible à la Fig. 3, l'autre étant cachée dans cette vue avant.

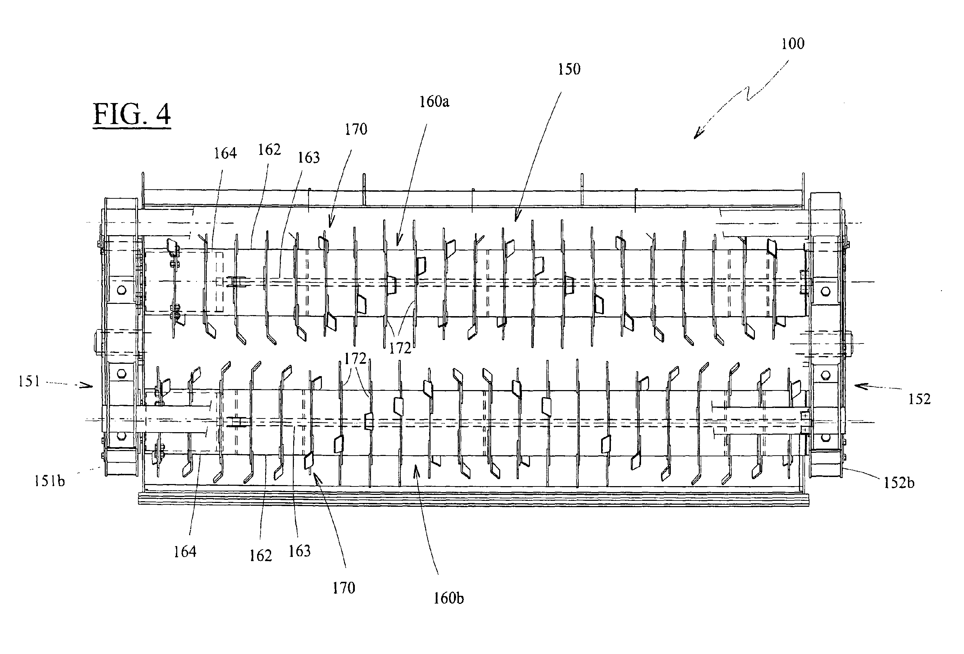

Chaque hérisson 160a, 160b est constitué à la Fig. 4 d'un moyeu d'entraînement 162 autour duquel est montée une pluralité de moyens de fragmentation 170.

Chaque moyeu 162, de préférence de section cylindrique, est monté libre à rotation autour d'un arbre 163 tenu à une extrémité par la seconde branche 152b d'une joue 152 et tenu à son autre extrémité par un moyen d'entraînement 164 disposé dans un boîtier fixé sur la seconde branche 151b de l'autre joue 151 et qui est logée dans une extrémité du moyeu 162. Le moyen d'entraînement 164 est constitué avantageusement d'un moteur hydraulique destiné à être alimenté par le circuit hydraulique de l'engin automoteur pour permettre l'entraînement en rotation du moyeu 162 supportant les moyens de fragmentation 170. Une roue libre, non représentée, est également montée entre le moteur hydraulique 164 et l'arbre 163 supportant le moyeu 162 pour réduire les à-coups de fonctionnement.

Le fonctionnement des moteurs hydrauliques est tel que le premier hérisson 160a et le second hérisson 160b sont entraînés en rotation de préférence dans le même sens comme l'indiquent les flèches R à la Fig. 7 afin d'éviter le bourrage des produits entre le premier hérisson 160a et le second hérisson 160b. Par ailleurs, le sens de rotation des moteurs hydrauliques est choisi pour que le matériau puisse être éjecté, d'une part, entre le premier hérisson 160a et le second hérisson 160b et, d'autre part, entre le premier hérisson 160a et la paroi dorsale de la benne 110.

La vitesse de rotation de chaque hérisson peut être déterminée indépendamment de celle de l'autre hérisson pour modifier le travail des moyens de fragmentation 170 afin de modifier la qualité de la fragmentation du contenu de la benne 110 pendant son vidage.

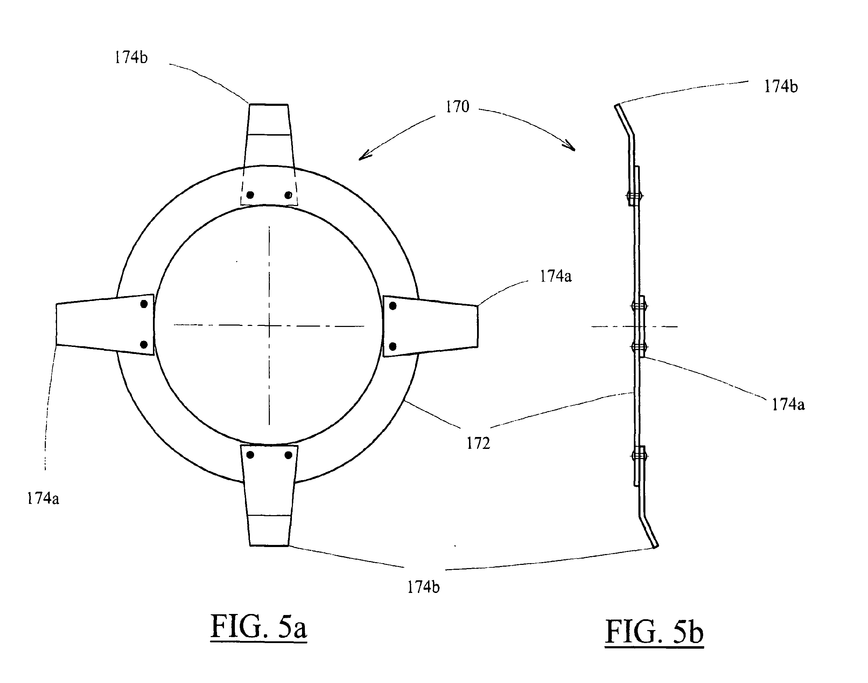

Aux Figs. 5a et 5b, chaque moyen de fragmentation 170 est constitué d'une couronne 172 destinée à être solidarisée sur un moyeu, par exemple par soudage, et qui supporte respectivement des couteaux 174a, 174b faisant saillie à sa périphérie. Quatre couteaux sont ainsi répartis régulièrement à la Fig. 5a autour de la couronne 172. On remarquera que certains couteaux, c'est-à-dire les couteaux 174b à ces Figs. présentent, à leur extrémité libre, une portion recourbée débordant latéralement de la couronne 172 pour accroître l'efficacité de la fragmentation. Dans le même but, ces couteaux 174b sont tournés alternativement d'un bord et de l'autre de la couronne 172. Les différents couteaux 174a, 174b sont montés de préférence par boulonnage pour permettre leur remplacement lorsqu'ils sont usés.

A la Fig. 4, les couronnes 172 des moyens de fragmentation 170 sont disposées à intervalles réguliers sur chacun des moyeux 162. Elles sont également décalées angulairement les unes par rapport aux autres de manière à ce que les couteaux présentant des extrémités recourbées tournées d'un même côté qu'ils supportent puissent former deux hélicoïdes de sens opposés sur respectivement les deux demi-parties d'un moyeu 162. Suivant la direction de ces hélicoïdes choisie lors de la fabrication des hérissons 160, cette disposition favorise, soit le déversement en andain du godet 100, soit le déversement élargi du godet.

Par ailleurs, les couronnes 172 d'un des moyeux 162 sont décalées latéralement par rapport à celles de l'autre moyeu pour favoriser encore l'efficacité de la fragmentation. Elles sont décalées avantageusement de la valeur d'un demi intervalle séparant deux couronnes voisines appartenant à un même moyeu.

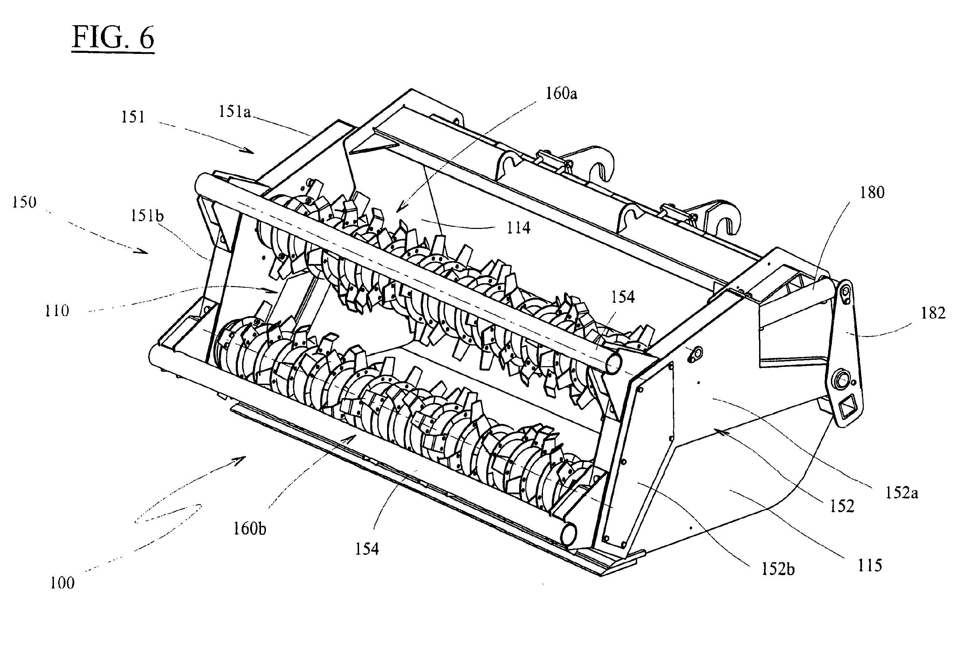

Le dispositif de fragmentation 150 est monté de manière mobile entre une position de dégagement où le premier hérisson 160a et le second hérisson 160b dégagent l'ouverture de la benne, comme cela apparaît à la Fig. 3 et une position de travail où le premier hérisson 160a et le second hérisson 160b recouvrent l'ouverture de la benne 110, comme cela apparaît à la Fig. 6.

A cet effet, le godet 100 de chargement et de déchargement est pourvu aux Figs. 2, 3 et 6 d'un moyen de manoeuvre 180 prévu pour manoeuvrer le dispositif de fragmentation 150 autour de la benne 110 entre ses deux positions extrêmes. Le moyen de manoeuvre 180 est avantageusement constitué d'une paire de vérins hydrauliques destinés à être alimentés par le circuit hydraulique de l'engin automoteur. Chaque vérin 180 est ainsi monté, d'une part, sur une platine 182 rapportée sur un flanc latéral 114, 115 de la benne 110 et, d'autre part, sur la première branche 151a, 152a de chaque joue 151, 152. Les deux vérins 180 ainsi que les platines 182 sont visibles uniquement sur la vue en perspective arrière de la Fig. 2. Ainsi, dans la position de dégagement du dispositif de fragmentation 150, le godet 100 de chargement et de déchargement fonctionne comme un godet conventionnel, comme cela est montré à la Fig. 1, alors que dans la position de travail du dispositif de fragmentation 150, visible à la Fig. 7, il permet, dans la position de vidage de la benne 100, l'aération de son contenu par le travail des couteaux.

Le fonctionnement du dispositif de fragmentation peut être asservi à celui du bras articulé de l'engin automoteur pour qu'il puisse se positionner automatiquement en position de travail lors du déplacement de l'engin.

Par ailleurs, le fonctionnement des vérins hydrauliques 180 est avantageusement asservi à la pression de fonctionnement des moteurs hydrauliques d'entraînement des hérissons pour éviter le calage de ces moteurs lorsque le dispositif de fragmentation 150 se déplace vers sa position de travail, c'est-à-dire lorsque les hérissons touchent le produit contenu dans la benne 110.

A la Fig. 3, les deux joues 151, 152 sont réunies par l'intermédiaire d'au moins une barre 154 destinée à permettre la synchronisation du mouvement des deux joues 151, 152. Deux barres 154 réunissent les deux joues à cette Fig. 3. Celles-ci sont disposées de préférence sur les secondes branches 151b, 152b des joues 151, 152, en étant positionnées en vis-à-vis des hérissons 160a, 160b de manière à former une barrière de protection vis-à-vis des couteaux 174 pendant la rotation des hérissons 160a, 160b. Seule la joue 152 est visible complètement dans cette vue en perspective.

Le fonctionnement du godet 100 se présente de la manière suivante. Il est attelé au bras articulé B d'un engin automoteur M. L'opérateur manoeuvre le godet 100 pour charger dans sa benne 110 un produit, par exemple du compost stocké en tas. Il déplace ensuite le godet 100 à un autre endroit choisi et commande le basculement du godet vers l'avant pour permettre le déversement de son contenu.

Le compost est alors fragmenté et éjecté en dehors de la benne 110 par le travail des couteaux 174 des hérissons 160. Au cours de cette étape de déversement, le compost est aéré.

Le godet de chargement et de déchargement de l'invention permet de déstructurer, aérer, concasser, mélanger le produit contenu de sa benne lors du déversement du produit.

Il convient en particulier pour aérer du compost, mais aussi pour concasser en fragments des bouteilles de verre, de palettes usagées et aussi pour mélanger des boues urbaines avec de la paille pour fabriquer du compost.

Le dispositif de fragmentation s'adapte sur la majorité des godets du commerce.

Dans une variante de réalisation, non représentée, du godet de chargement et de déchargement, le dispositif de fragmentation qu'il comporte est pourvu d'un seul hérisson. Le diamètre de ce hérisson est adapté pour qu'il puisse recouvrir, dans la position de travail du dispositif de fragmentation, l'ouverture de la benne.

## Revendications

1. Godet (100) de chargement et de déchargement destiné à être supporté par un bras articulé (B) d'un engin automoteur (M), le godet (100) comprenant une benne (110), **caractérisé en ce qu'**il comporte un dispositif de fragmentation (150) destiné à permettre la fragmentation du contenu de la benne (110) lors de son vidage, le dispositif de fragmentation (150) comprenant au moins un hérisson (160a, 160b) monté à rotation entre deux joues (151, 152) fixées de manière articulée sur des flancs latéraux (114, 115) dont est pourvue la benne (110), le dispositif de fragmentation (150) étant mobile entre une position où ledit ou chaque hérisson (160a, 160b) dégage l'ouverture de la benne (110) et une position où il recouvre l'ouverture de la benne (110).

2. Godet (100) selon la revendication 1, **caractérisé en ce qu'**il est pourvu d'un moyen de manoeuvre (180) apte à déplacer le dispositif de fragmentation (150) autour de la benne (110) entre ses deux positions extrêmes.

3. Godet (100) selon la revendication 1 ou 2, **caractérisé en ce que** ledit ou chaque hérisson (160a, 160b) comporte un moyeu (162) autour duquel est montée une pluralité de moyens de fragmentation (170), un moyen d'entraînement (164) étant fixé sur une joue (151, 152) en étant logé à l'intérieur du moyeu (162), pour entraîner à rotation ledit moyeu (162).

4. Godet (100) selon la revendication 1, 2 ou 3, **caractérisé en ce que** chaque moyen de fragmentation (170) comprend une couronne (172) sur laquelle sont montés des couteaux (174a, 174b) faisant saillie à sa périphérie.

5. Godet (100) selon la revendication 4, **caractérisé en ce que** les extrémités libres de certains couteaux (174b) débordent latéralement de la couronne (172).

6. Godet (100) selon la revendication 5, **caractérisé en ce que** des couteaux (174b) sont tournés alternativement d'un bord et de l'autre de la couronne (172).

7. Godet (100) selon la revendication 4, 5 ou 6, **caractérisé en ce que** les couronnes (172) sont disposées à intervalles réguliers sur ledit ou chaque moyeu (162), les couronnes (172) étant décalées angulairement les unes par rapport aux autres de manière à ce que les couteaux (174b) d'un même type puissent former deux hélicoïdes de sens opposés sur respectivement les deux demi-parties du moyeu (162).

8. Godet (100) selon l'une quelconque des revendications 4 à 7, **caractérisé en ce que** les couteaux (174a, 174b) sont montés de manière amovible sur les couronnes (172).

9. Godet (100) selon l'une quelconque des revendications précédentes, **caractérisé en ce que** chaque joue (151, 152) comprend une première branche (151a, 152a), une seconde branche (151b, 152b) disposée de manière oblique dans le prolongement de la première, la première branche (151a, 152a) étant articulée sur une platine (182) fixée sur un flanc latéral (114, 115), un vérin constitutif du moyen de manoeuvre (180) étant monté entre la platine (182) et la première branche (151a, 152a), la seconde branche (151b, 152b) supportant une des extrémités des hérissons (160a, 160b).

10. Godet (100) selon l'une quelconque des revendications précédentes, **caractérisé en ce que** les joues (151, 152) sont réunies par l'intermédiaire d'au moins une barre (154) permettant la synchronisation du mouvement des deux joues (151, 152).

11. Godet (100) selon l'une quelconque des revendications 3 à 10, **caractérisé en ce qu'**une roue libre hydraulique est montée entre le moyen d'entraînement (164) et un arbre (163) supportant ledit ou chaque moyeu d'entraînement (162) pour réduire les à-coups de fonctionnement.

12. Godet (100) selon l'une quelconque des revendications 2 à 11, **caractérisé en ce que** le fonctionnement du moyen de manoeuvre (180) est asservi à la pression de fonctionnement du moyen d'entraînement (164) dudit ou de chaque hérisson (160a, 160b) pour éviter le calage de ce moyen d'entraînement (164) lorsque le dispositif de fragmentation (150) se déplace vers sa position de travail.

13. Godet (100) selon l'une quelconque des revendications précédente, **caractérisé en ce que** le dispositif de fragmentation (150) comprend un premier hérisson (160a), un second hérisson (160b) disposés parallèlement l'un par rapport à l'autre.

14. Godet (100) selon la revendication 13, **caractérisé en ce que** la vitesse de rotation de chaque hérisson (160a, 160b) est déterminée indépendamment de celle de l'autre hérisson (160b, 160a) pour modifier le travail des moyens de fragmentation (170) afin de modifier la qualité de la fragmentation du contenu de la benne (110) pendant son vidage.

15. Godet (100) selon la revendication 13 ou 14, **caractérisé en ce que** le fonctionnement des moyens d'entraînement (164) est tel qu'ils sont aptes à entraîner les hérissons (160a, 160b) dans le même sens de rotation.

16. Godet (100) selon la revendication 13, 14 ou 15, **caractérisé en ce que** les couronnes (172) d'un des moyeux (162) sont décalées latéralement par rapport à celles de l'autre moyeu (162).

17. Godet (100) selon l'une quelconque des revendications 13 à 16, **caractérisé en ce que** la position d'un hérisson (160a, 160b) peut être modifiée, par l'intermédiaire d'un dispositif de réglage, de manière à corriger l'écartement entre le premier hérisson (160a) et le second hérisson (160b) pour l'adapter à la nature des produits à fragmenter.

18. Godet (100) selon l'une quelconque des revendications 13 à 17, **caractérisé en ce que** deux barres (154) réunissent les secondes branches (151b, 152b) des joues (151, 152), les barres (154) étant disposées respectivement en vis-à-vis des hérissons (160a, 160b) de manière à former une barrière de protection vis-à-vis des couteaux (174a, 174b) pendant le fonctionnement du dispositif de fragmentation (150).

19. Dispositif de fragmentation (150) prévu pour être monté sur un godet (100) de chargement et de déchargement de type pourvu d'une benne (110), le godet (100) étant destiné à être supporté par un bras articulé (B) d'un engin automoteur (M), le dispositif de fragmentation (150) étant prévu pour permettre la fragmentation du contenu d'une benne (110) lors de son vidage, **caractérisé en ce qu'**il comprend deux joues (151, 152) destinées à être montées de manière articulée respectivement sur les deux flancs latéraux (114, 115) du godet (100), au moins un hérisson (160a), monté à rotation entre les deux joues (151, 152), le dispositif de fragmentation (150) pouvant être déplacé autour de la benne (110) entre une position où ledit ou chaque hérisson (160) dégage l'ouverture de la benne (110) et une position où il recouvre l'ouverture de la benne (110).
